# EUROPÄISCHE PATENTSCHRIFT

(11) **EP 2 593 491 B1**
(45) Veröffentlichungstag und Bekanntmachung des Hinweises auf die Patenterteilung: **23.09.2015**
(21) Anmeldenummer: 11738188.9
(22) Anmeldetag: 11.07.2011
(51) Int. Cl.: C08G 18/10, C08G 18/42, C08G 18/76, C08G 18/40, C08G 18/80

(54) **SCHWACH MODIFIZIERTE PRÄPOLYMERE UND IHRE ANWENDUNGEN**
LIGHTLY MODIFIED PREPOLYMERS AND USES THEREOF
PRÉPOLYMÈRES FAIBLEMENT MODIFIÉS ET LEURS UTILISATIONS

(30) Priorität: 09.05.2011 DE 102011050220; 13.07.2010 DE 102010027052
(43) Veröffentlichungstag der Anmeldung: 22.05.2013
(73) Patentinhaber: Bayer Intellectual Property GmbH, 40789 Monheim (DE)
(72) Erfinder: PIRKL, Hans-Georg, 51377 Leverkusen (DE); SCHMIDT, Manfred, 41540 Dormagen (DE); ALBERS, Reinhard, 51375 Leverkusen (DE); VAN DE BRAAK, Johannes, 53773 Hennef (DE); ROERS, Rolf, 51519 Odenthal (DE)
(74) Vertreter: BIP Patents
(86) Internationale Anmeldenummer: PCT/EP2011/061738
(87) Internationale Veröffentlichungsnummer: WO 2012/007418

(56) Entgegenhaltungen:
- WO-A1-2006/108833
- US-A- 5 962 541

## Beschreibung

Die vorliegende Erfindung betrifft ein Isocyanat-terminiertes Präpolymer mit einem NCO-Gehalt von ≥ 26,0 Massen-% bis ≤ 31,0 Massen-%, welches erhältlich ist aus der Reaktion von einer Isocyanat-Zusammensetzung umfassend ≥ 30 Massen-% bis ≤ 60 Massen-% 2-Kern-MDI und ≥ 40 Massen-% bis ≤ 70 Massen-% polymerem MDI mit einem bifunktionellen Polyesteretherpolyol, welcher aus der Reaktion einer Dicarbonsäure/Dicarbonsäurederivat mit mindestens einem Polyol sowie mit einem Epoxid erhalten wird. Weitere Gegenstände der Erfindung sind ein aus diesem Präpolymer hergestelltes PUR/PIR-Polymer, dessen Verwendung sowie hierauf beruhende Verbundelemente.

Im Anwendungsgebiet der Metallverbundelemente für den Industriehallenbau ist eine hohe und dauerhafte Haftfestigkeit des Isolationsschaumes zur metallischen Deckschicht erforderlich. Dieses gilt insbesondere für Polyisocyanuratschäume. Hierzu können als Ausgangsmaterialien isocyanatgruppenhaltige Polyurethan-Präpolymere verwendet werden, die durch Umsetzung eines stöchiometrischen Überschusses eines organischen Polyisocyanats mit einem organischen Polyol erhalten werden. Solche Präpolymere sind im Bereich der Polyurethane wohlbekannt und werden beispielsweise bei der Herstellung von Weich- und Hartschäumen sowie von Elastomeren, Beschichtungen, Haftmitteln und dergleichen verwendet.

Die Herstellung solcher NCO-Präpolymere ist in zahlreichen Schriften beschrieben worden. So offenbart beispielsweise DE 69132613 T2 ein Verfahren zur Herstellung von Weichschaumstoffen, welches die folgenden Schritte umfasst:
- Kontinuierliche Anlieferung einer organischen Polyisocyanatzusammensetzung und einer isocyanatreaktiven Verbindung mit einem durchschnittlichen Molekulargewicht von mindestens 1000, und wahlweise eines Katalysators zu einem Reaktionsbereich, wobei das relative Verhältnis der Isocyanatzusammensetzung und der isocyanatreaktiven Verbindung für die Bildung eines Vorpolymers mit einem NCO-Gehalt im Bereich von 2 bis 15 Gewichts-% geeignet ist;
- Umsetzung der Isocyanatzusammensetzung und der isocyanatreaktiven Verbindung im Reaktionsbereich unter Bildung eines isocyanat-terminierten Vorpolymers;
- Kontinuierliche Entfernung des Reaktionsgemisches aus dem Reaktionsbereich;
- falls notwendig, Ausreifenlassen des Reaktionsgemisches zur Bildung eines Vorpolymers mit einem NCO-Gehalt im Bereich von 2 bis 15 Gewichts-%,
- Anliefern des Vorpolymers zu einem Schaumstoffbildungsbereich;
- Umsetzung des Vorpolymers im Schaumstoffbildungsbereich mit einer Wasser umfassenden isocyanatreaktiven Komponente; und
- Wiedergewinnung des derart gebildeten Schaumstoffs, wobei der Reaktionsbereich auch als Schaumstoffbildungsbereich verwendet wird.

In WO 94/2936 1A1 wird ein Verfahren zur Herstellung von Weichschaumstoff beschrieben, bei dem ein Präpolymer mit einem NCO-Gehalt von 5 bis 10 Gewichts-% eingesetzt wird. Das Präpolymer ist das Reaktionsprodukt aus einem Überschuss Polyisocyanat mit wenigstens 85 Gewichts-% 4,4'-Diphenylmethandiisocyanat oder einer Variante davon mit einem Polyol, der eine nominelle Hydroxylfunktionalität von 2,5 bis 3,5, ein durchschnittliches Hydroxyl-Äquivalentgewicht von 1000 bis 3000 und einen Oxyethylengehalt von 50 bis 85 Gewichts-% aufweist. Das Präpolymer wird mit Wasser umgesetzt, wobei die Menge des Wassers wenigstens 20 Gewichtsteile pro 100 Gewichtsteile des Präpolymers beträgt.

DE 2823762 A1 betrifft ein Verfahren zur kontinuierlichen Herstellung von thermoplastischen Polyurethanen aus Polyhydroxyverbindungen, Diisocyanaten und niedermolekularen Kettenverlängerungsmitteln, bei dem die Ausgangskomponenten durch eine Mischzone und danach durch eine Reaktionszone geleitet werden. Die Ausgangskomponenten werden in einer Mischzone vermischt, in der eine für die anschließende Polyadditionsreaktion ausreichende praktisch vollständige Durchmischung stattfindet. Die Produkttemperatur ist so niedrig, dass eine Reaktion der Komponenten weitgehend vermieden wird. Das Gemisch wird anschließend mittels einer Präzisionspumpe in einen Statikmischer von einer solchen Länge und Durchmesser eingespeist, dass bei einer das Ansetzen von Polymeren verhindernden Fließgeschwindigkeit die Reaktionskomponenten so lange im Statikmischer verbleiben, dass die Polyaddition erfolgt.

DE 19823392 A1 offenbart ein Verfahren zur Herstellung von isocyanatgruppenhaltigen Präpolymeren durch Umsetzung von organischen Isocyanaten mit H-aciden Verbindungen, das dadurch gekennzeichnet ist, dass die Umsetzung zum Prepolymeren unmittelbar im Prozessstrom der isocyanaterzeugenden Anlage erfolgt. Gegenstände der Veröffentlichung sind außerdem die so hergestellten isocyanatgruppenhaltigen Prepolymeren, deren Verwendung zur Herstellung von PUR sowie ein Verfahren zur Herstellung von PUR durch Umsetzung von mindestens einem isocyanatgruppenhaltigen Prepolymeren, gegebenenfalls im Gemisch mit weiteren organischen und/oder modifizierten organischen Isocyanaten mit Verbindungen mit mindestens zwei reaktiven Wasserstoffatomen in Gegenwart von gegebenenfalls Treibmitteln, Katalysatoren sowie gegebenenfalls weiteren Hilfsmitteln und/oder Zusatzstoffen.

EP 0 497 131 A2 offenbart Ether- und Estergruppen aufweisende Isocyanat-Präpolymere mit einem NCO-Gehalt von 1,9 bis 25 Gewichts-% auf Basis von A) einer Polyisocyanatkomponente, bestehend aus mindestens einem organischen Polyisocyanat es mittleren Molekulargewichts von 168 bis 1000, B) Veresterungsprodukten von Polyetherpolyolen einer mittleren Hydroxylzahl von 200 bis 600 mit Monocarbonsäuren, gegebenenfalls in Abmischung mit untergeordneten Mengen an mehrbasischen Carbonsäuren und gegebenenfalls C) organischen Polyhydroxylverbindungen des Molekulargewichtsbereich von 62 bis 200 in einer Menge von bis zu 25 Hydroxyläquivalent-%, bezogen auf Komponente B), ein Verfahren zur Herstellung derartiger Isocyanat-Präpolymere durch Umsetzung der genannten Ausgangsmaterialien unter Einhaltung eines NCO/OH-Äquivalentverhältnisses von 1,7:1 bis 20:1 und die Verwendung der Isocyanat-Präpolymeren als Bindemittel oder Bindemittelkomponente in Polyurethan-Beschichtungsmitteln, -Dichtmassen oder - Vergussmassen.

DE 196 01 410 A1 beschäftigt sich mit einem Verfahren zur Herstellung von Polyurethanweichschaumstoffen durch Umsetzung von a) organischen und/oder modifizierten organischen NCO-Gruppenhaltigen Verbindungen mit b) höhermolekularen Verbindungen mit mindestens zwei reaktiven Wasserstoffatomen und c) gegebenenfalls niedermolekularen Kettenverlängerungs- und/oder Vernetzungsmitteln in Gegenwart von d) Treibmitteln, e) Katalysatoren, f) Flammschutzmitteln sowie gegebenenfalls g) weiteren Hilfsmitteln und/oder Zusatzstoffen. Als organische und/oder modifizierte organische NCO-Gruppenhaltige Verbindungen werden NCO-Gruppenhaltige Präpolymere eingesetzt, die Umsetzungsprodukte aus Polyesterpolyolen und/oder Polyesteretherpolyolen und aromatischen Diisocyanaten sind und einer speziellen Nachbehandlung unterzogen werden.

WO 2009/055436 A1 betrifft Polyesteretherpolyole und ihre Verwendung in Urethanpräpolymeren, Urethanschäumen und nicht geschäumten Urethanbeschichtungen, Klebstoffen, Versiegelungsmassen und/oder Elastomeren. Verfahren zur Herstellung solcher Polyesteretherpolyole unter Doppelmetallcyanidkatalyse und zur Herstellung von Urethanpräpolymeren werden beschrieben. Die dort beschriebenen Polyesteretherpolyole sind vorzugsweise das Reaktionsprodukt aus Phthalsäureanhydrid, Diethylenglykol und Propylenoxid. Die Polyesteretherpolyole weisen eine verbesserte Löslichkeit und Kompatibilität in Mischungen aus entweder Polyetherpolyolen und/oder Polyesterpolyolen. Die Polyesteretherpolyole sind vorzugsweise weniger viskos als die Polyesterpolyol-Zwischenstufen und sind in der Regel in entweder Polyester- und/oder Polyetherpolyolen löslich. Zusätzlich verbessern die Polyesteretherpolyole die hydrolytische Stabilität von Beschichtungen, Klebstoffen, Versiegelungsmassen und Elastomeren, in denen sie eingesetzt werden.

Die im Stand der Technik beschriebenen Verfahren zur Herstellung von NCO-Präpolymeren bedürfen demnach einer Umsetzung einer isocyanatgruppenhaltigen Komponente mit einer isocyanatgruppenreaktiven Komponente in einem Reaktor und insbesondere unter kontrollierten Misch- und Temperaturbedingungen.

Die vorliegende Erfindung hat sich daher die Aufgabe gestellt, auf einfache und schnelle Weise herstellbare NCO-Präpolymere bereitzustellen, wobei die aus den Präpolymeren hergestellten PUR-oder PUR/PIR-Schäume eine sehr gute Haftung von mindestens 0,2 N/mm² zu metallischen Deckschichten in Metallverbundelementen aufweisen.

Diese Aufgabe wird erfindungsgemäß gelöst durch ein Isocyanat-terminiertes Präpolymer C mit einem NCO-Gehalt von ≥ 26,0 Massen-% bis ≤ 31,0 Massen-%, bezogen auf die Masse des Präpolymers C, erhältlich aus der Reaktion von
(i) einer Isocyanat-Zusammensetzung A mit einer Viskosität bei 25 °C von ≥ 60 mPas bis ≤ 800 mPas, umfassend > 25 Massen-% bis ≤ 60 Massen-% monomeres Diphenylmethandiisocyanat (MDI) A1 und ≥ 40 Massen-% bis ≤ 75 Massen-% polymeres Diphenylmethandiisocyanat (pMDI) A2, wobei die Summe der Anteile der Komponenten A1 und A2 ≤ 100 Massen-% beträgt, mit
(ii) einem Polyesteretherpolyol B mit einer durchschnittlichen Funktionalität von ≥1,9 bis ≤ 2,1 und einer OH-Zahl von ≥ 200 mg(KOH) / g bis ≤ 500 mg(KOH) / g, erhalten aus der Reaktion von einer Dicarbonsäure und/oder einem Dicarbonsäurederivat B1 mit mindestens einem Polyol B2 sowie mit einem Epoxid B3,
wobei das Polyesteretherpolyol B ausgewählt ist aus der Gruppe von Verbindungen bestehend aus Alkoxilierungsprodukten von Oligo- und Polyestern aus aromatischen und aliphatischen Dicarbonsäuren und Dicarbonsäurenderivaten B 1 mit gegenèber Isocyanaten reaktiven Endgruppen, wobei das Polyesteretherpolyol B in Gehalten von ≥ 1,5 Massen-% bis ≤ 6,0 Massen-%, bezogen auf die Summe der Massen von A und B, eingesetzt wird.

Überraschend wurde gefunden, dass die isocyanatgruppenhaltige Komponente A im stöchiometrischen Überschuss und eine isocyanatgruppenreaktive Komponente B im stöchiometrischen Unterschuss bei Raumtemperatur oder erhöhten Temperaturen von bis zu 100 °C in einer Mischvorrichtung kontinuierlich zusammengeführt werden können und reproduzierbar zu einem isocyanatgruppenhaltigen Präpolymer reagieren. Alternativ kann in einem Reaktionskessel die Komponente A vorgelegt und bei Raumtemperatur bis 100 °C mit der Komponente B zur Reaktion gebracht werden kann. Es entsteht ebenfalls das isocyanatgruppenhaltige Präpolymer.

Überraschenderweise wurde weiterhin gefunden, dass die aus dem erfindungsgemäßen schwach modifizierten Isocyanat hergestellten PUR/PIR-Schäume eine verbesserte Haftung in Metallverbundelementen gegenüber den mit unmodifizierten Isocyanaten hergestellten Schäumen aufweisen.

Durch den Überschuss der NCO-Komponente A erhält man ein Präpolymer mit freien NCO-Endgruppen. Der NCO-Gehalt liegt vorzugsweise bei ≥ 27,0 Massen-% bis ≤ 30,0 Massen-%, mehr bevorzugt bei ≥ 27,5 Massen-% bis ≤ 29,5 Massen-% und kann anhand von ISO 14896 bestimmt werden.

Vorzugsweise wird das Polyesteretherpolyol B in Gehalten von ≥ 2,0 Massen-% bis ≤ 5 Massen-% und mehr bevorzugt von ≥ 2,5 Massen-% bis ≤ 4 Massen-%, bezogen auf die Summe der Massen von A und B, eingesetzt.

Als Polyisocyanat A können handelsübliche Gemische von monomerem MDI und polymerem MDI eingesetzt werden. Die Viskosität bei 25 °C lässt sich anhand von DIN 53019 Teil 1 bestimmen und beträgt vorzugsweise > 80 mPas bis ≤ 500 mPas, mehr bevorzugt ≥ 90 mPas bis ≤ 300 mPas.

Im Sinne der vorliegenden Erfindung werden die Begriffe "monomeres MDI" und "2-Kern-MDI" synonym verwendet. Weiterhin bezeichnet "polymeres MDI" di- und trimere Addukte und höhere Homologe des monomeren MDI.

Vorzugsweise beträgt deren Zusammensetzung ≥ 35 Massen-% bis ≤ 55 Massen-% monomeres MDI und ≥ 45 Massen-% bis ≤ 65 Massen-% polymeres MDI, wobei die Summe dieser Anteile wiederum ≤ 100 Massen-% ausmacht. Noch mehr bevorzugt sind ≥ 40 Massen-% bis ≤ 50 Massen-% monomeres MDI und ≥ 50 Massen-% bis ≤ 60 Massen-% polymeres MDI.

Geeignete Polyesteretherpolyole B sind Alkoxylierungsprodukte von Oligo- und Polyestern aus aromatischen und aliphatischen Dicarbonsäuren und Dicarbonsäurederivaten B 1 wie zum Beispiel Anhydriden mit gegenüber Isocyanaten reaktiven Endgruppen. Polyesteretherpolyole können durch gezielten Aufbau hergestellt werden, zum Beispiel durch Alkoxylierung von Carbonsäuren oder Carbonsäureanhydriden oder Polyestern, oder durch molekülverdoppelnde Kondensation von OH-terminierten Polyestern. Diese Verbindungen können ebenfalls mit den bekannten Methoden mit Epoxiden zur Reaktion gebracht werden.

Die OH-Zahl des Polyesteretherpolyols B beträgt vorzugsweise ≥ 250 mg(KOH) / g bis ≤ 380 mg(KOH) / g, besonders bevorzugt ≥ 280 mg(KOH) / g bis ≤ 350 mg(KOH) / g und ganz besonders bevorzugt ≥ 300 mg(KOH) / g bis ≤ 320 mg(KOH) / g. Sie lässt sich nach DIN 53240 ("Bestimmung der Hydroxylzahl") bestimmen.

Die durchschnittliche Funktionalität F_{N} des Polyols B ist 1,9 bis 2,1, vorzugsweise 1,95 bis 2,05 und ganz besonders bevorzugt 2,0.

Die zum Einsatz kommenden Polyesteretherpolyole B können als Startermoleküle B1 zum Beispiel Adipinsäure, Maleinsäure, Fumarsäure, Phthalsäure, Terephthalsäure, Isophthalsäure, Tetrahydrophthalsäure, halogenierte Phthal- und Tetrahydrophthalsäuren sowie deren Derivate enthalten. Bevorzugte Carbonsäuren sind Adipinsäure, Maleinsäure, Fumarsäure, beziehungsweise deren Derivate, besonders bevorzugt sind Phthalsäure, Terephthalsäure und Isophthalsäure beziehungsweise deren Derivate. Insbesondere sind bevorzugte Carbonsäure-Derivate deren Carbonsäureanhydride.

Die neben den Carbonsäuren beziehungsweise Carbonsäurederivaten verwendeten Startermoleküle B2 sind Folgeprodukte des Ethylenoxids und Propylenoxids wie zum Beispiel Ethylenglykol, Diethylenglykol, Triethylenglykol, 1,2-Propylenglykol, Dipropylenglykol oder die primären Alkohole wie zum Beispiel 1,4-Butandiol, 1,6-Hexandiol, Neopentylglykol, 1,3-Butandiol oder verzweigende Triolkomponenten wie Trimethylolpropan, Trimethylolethan oder Glycerin.

Bevorzugte Epoxide B3 sind Ethylenoxid und/oder Propylenoxid.

Ausführungsformen der vorliegenden Erfindung werden nachfolgend beschrieben, wobei die einzelnen Ausführungsformen frei miteinander kombiniert werden können, sofern sich aus dem Kontext nicht eindeutig das Gegenteil ergibt,

In einer Ausführungsform des erfindungsgemäßen Präpolymers weist dieses eine Viskosität bei 25 °C von ≥ 300 mPas bis ≤ 1600 mPas auf. Diese Viskosität liegt vorzugsweise in einem Bereich von ≥ 350 mPas bis ≤ 1400 mPas, besonders bevorzugt von ≥ 500 mPas bis ≤ 1000 mPas. Sie lässt sich anhand von DIN 53019 Teil 1 bestimmen.

In einer weiteren Ausführungsform des erfindungsgemäßen Präpolymers weist die Komponente A eine Viskosität bei 25 °C von ≥ 90 mPas bis ≤ 300 mPas und einen NCO-Gehalt von ≥ 30 Massen-% bis ≤ 33 Massen-% auf. Diese Viskosität (DIN 53019 Teil 1) liegt vorzugsweise in einem Bereich von ≥ 160 mPas bis ≤ 240 mPas, mehr bevorzugt von ≥ 170 mPas bis ≤ 230 mPas. Der NCO-Gehalt (ISO 14896) kann vorzugsweise von ≥ 30,5 Massen-% bis ≤ 32,5 Massen-% betragen.

In einer weiteren Ausführungsform des erfindungsgemäßen Präpolymers wird das PolyesteretherpolyolB aus der Reaktion von Phthalsäureanhydrid als Komponente B1, Diethylenglykol als Komponente B2 und Ethylenoxid als Komponente B3 erhalten. Als Katalysatoren können ethoxylierte Amine eingesetzt werden. Diese Katalysatoren können im Polyesteretherpolyol ohne nachteilige Wirkung in der Präpolymerherstellung verbleiben.

Ein weiterer Gegenstand der vorliegenden Erfindung ist ein Polyurethan-/Polyisocyanuratpolymer, erhältlich aus der Reaktion eines erfindungsgemäßen Präpolymers C mit einer Isocyanat-reaktiven Komponente D. Solch ein Polymer kann als Isolationsschaum und/oder Haftvermittler insbesondere bei der Herstellung von Metallverbundelementen eingesetzt werden. Es können die üblichen, dem Fachmann bekannten Zusatzstoffe wie Tenside, Flammschutzmittel, Füllstoffe und dergleichen hinzugefügt werden. Hinsichtlich Details zum Präpolymer wird zur Vermeidung von Wiederholungen vollumfänglich auf die obigen Ausführungen verwiesen.

Beispiele für die Isocyanat-reaktive Komponente D sind Polyetherpolyamine und/oder vorzugsweise Polyole ausgewählt aus der Gruppe der Polyetherpolyole, Polyesterpolyole, Polythioetherpolyole, Polyesteramide, der hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole.

Geeignete Polyesterpolyole können beispielsweise aus organischen Dicarbonsäuren mit 2 bis 12 Kohlenstoffatomen, vorzugsweise Dicarbonsäuren mit 4 bis 6 Kohlenstoffatomen, und mehrwertigen Alkoholen, vorzugsweise Diolen, mit 2 bis 12, vorzugsweise 2 bis 6, Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie zum Beispiel Dicarbonsäureester von Alkoholen mit 1 bis 4 Kohlenstoffatomen oder Dicarbonsäureanhydride, eingesetzt werden. Beispiele für zwei- und mehrwertige Alkohole, insbesondere Diole, sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, zum Beispiel ε-Caprolacton oder Hydroxycarbonsäuren, zum Beispiel ω-Hydroxycapronsäure.

Zur Herstellung der Polyesterpolyole können die organischen, zum Beispiel. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie zum Beispiel. Stickstoff, Kohlenmonoxid, Helium, Argon u. a., in der Schmelze bei Temperaturen von 150 bis 250 °C, vorzugsweise 180 bis 220 °C, gegebenenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, mg KOH/g unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie zum Beispiel. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.

Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000 g/mol.

Die Polyetherpolyole werden nach bekannten Verfahren, beispielsweise durch anionische Polymerisation mit Alkalihydroxiden, wie zum Beispiel. Natrium- oder Kaliumhydroxid, oder Alkalialkoholaten, wie zum Beispiel. Natriummethylat, Natrium- oder Kaliumethylat oder Kaliumisopropylat, als Katalysatoren und unter Zusatz mindestens eines Startermoleküls, das 2 bis 4, vorzugsweise 2 bis 3, reaktive Wasserstoffatome gebunden enthält, oder durch kationische Polymerisation mit Lewissäuren, wie Antimonpentachlorid, Borfluorid-Etherat u. a., oder Bleicherde, als Katalysatoren aus einem oder mehreren Alkylenoxiden mit 2 bis 4 Kohlenstoffatomen im Alkylenrest hergestellt.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N-und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin, und 4,4'-, 2,4'- und 2,2'-Diaminodiphenylmethan. Als Startermoleküle kommen ferner in Betracht: Alkanolamine, wie zum Beispiel. Ethanolamin, N-Methyl- und N-Ethylethanolamin, Dialkanolamine, wie zum Beispiel. Diethanolamin, N-Methyl- und N-Ethyldiethanolamin, und Trialkanolamine, wie zum Beispiel. Triethanolamin, und Ammoniak. vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan und Pentaerythrit, während für Hartschaumpolyetherole vorwiegend höherfunktionelle Starter, wie zum Beispiel. Sorbit und Saccharose, zur Anwendung kommen.

Die Polyetherpolyole, vorzugsweise Polyoxypropylen- und Polyoxypropylenpolyoxyethylenpolyole, besitzen zum Beispiel eine Funktionalität von vorzugsweise 2 bis 4 und insbesondere 2 bis 3 und Molekulargewichte von 300 g/mol bis 8000 g/mol, vorzugsweise 300 g/mol bis 6000 g/mol und insbesondere 1000 g/mol bis 5000 g/mol, und geeignete Polyoxytetramethylenglykole ein Molekulargewicht bis ungefähr 3500 g/mol, während bei Hartschaumpolyetherolen Molekulargewichte von 300 g/mol bis 1000 g/mol die Regel sind.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch *in situ* Polymerisation von Acrylnitril, Styrol oder vorzugsweise Mischungen aus Styrol und Acrylnitril, zum Beispiel. im Gewichtsverhältnis 90 : 10 bis 10 : 90, vorzugsweise 70 : 30 bis 30 : 70, in zweckmäßigerweise den vorgenannten Polyetherpolyolen analog den Angaben in DE 11 11 394, DE 12 22 669 (US-A-3,304,273, US-A-3,383,351, US-A-3,523,093), DE 11 52 536 (GB 1040452) und DE 11 52 537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: zum Beispiel. Polyharnstoffe, Polyhydrazide, tertiäre Aminogruppen gebunden enthaltende Polyurethane und/oder Melamin und die zum Beispiel. beschrieben werden in der EP-B-011 752 (US-A-4,304,708), US-A-4,374,209 und DE-A-32 31 497.

In einer Ausführungsform des erfindungsgemäßen Polyurethan-/Polyisocyanuratpolymers beträgt im Reaktionsgemisch der Komponenten C und D das molare Verhältnis von Isocyanat-Gruppen zu Hydroxyl-Gruppen ≥ 1:1 bis ≤ 5:1. Mit anderen Worten ausgedrückt beträgt der Index dieser Reaktionsmischung 100 bis 500. Der Index kann auch ≥ 120 bis ≤ 450 und bevorzugt ≥ 180 bis ≤ 420 betragen. Bei solchen Kennzahlen werden überwiegend Polyisocyanuratschäume erhalten, welche mit geringeren Mengen an Flammschutzmitteln auskommen und dennoch fest an Deckschichten, insbesondere Aluminiumdeckschichten, angebunden werden können.

In einer weiteren Ausführungsform des erfindungsgemäßen Polyurethan-/Polyisocyanuratpolymers findet die Reaktion des Präpolymers C mit der Isocyanat-reaktiven Komponente D in Gegenwart eines Treibmittels E statt. Bevorzugte Treibmittel sind CO₂, *n*-Pentan, iso-Pentan und/oder Cyclopentan. Der so erhaltene Schaumstoff ist vorzugsweise ein Polyisocyanurat-Hartschaumstoff, definiert anhand seiner Druckspannung bei 10% Stauchung beziehungsweise von ≥ 100 kPa bis ≤ 300 kPa. Diese Druckspannung oder Druckfestigkeit kann gemäß DIN 53421/DIN EN ISO 604 bestimmt werden. Sie kann auch in einem Bereich von ≥ 150 kPa bis ≤ 250 kPa oder von ≥ 180 kPa bis ≤ 280 kPa liegen.

In einer weiteren Ausführungsform des erfindungsgemäßen Polyurethan-/Polyisocyanuratpolymers umfasst die Isocyanat-reaktive Komponente D ≥ 50 Massen-% bis ≤ 95 Massen-% eines Polyesterpolyols D1 und ≥ 5 Massen-% bis ≤ 50 Massen-% eines Polyetherpolyols D2, jeweils bezogen auf die Gesamtmasse der Komponente D, und die Summe der Anteile der Komponenten D1 und D2 beträgt weiterhin ≤ 100 Massen-%. Erfindungsgemäß mit eingeschlossen sind Mischungen mehrerer Polyesterpolyole D1 und Polyetherpolyole D2. Bevorzugte Bereiche für den Anteil des Polyesterpolyols D1 sind ≥ 85 Massen % bis ≤ 92 Massen % und für den Anteil des Polyetherpolyols D2 ≥ 6 Massen % bis ≤ 10 Massen %.

Das Polyesterpolyol D1 kann vorzugsweise durch ein Verfahren erhalten werden, in dem
a) wenigstens ein Carbonsäureanhydrid (A') und Diethylenglykol (B') vermischt werden,
   wobei das Molverhältnis der Komponenten (B') zu (A') im Bereich von 1,5 zu 1,0 bis 0,7 zu 1,0 liegt und der Gewichtsanteil der Komponenten (A') und (B') bezogen auf das Gewicht aller Komponenten der Mischung im Bereich zwischen 66 bis 90 Gew.- % liegt,
   und in einem Schritt
b) zu dem Polyesterpolyol aus Schritt a) Diethylenglykol (B') zugesetzt wird,
wobei das Polyesterpolyol aus Schritt a) eine höhere Molmasse als das Polyesterpolyol aus Schritt b) aufweist.

In Schritt a) werden wenigstens ein C₂-C₄ Glykol (C') und wenigstens eine aliphatische C₅ - C₁₂ Dicarbonsäure (D') oder wenigstens ein C₅ - C₁₀ Glykol (E') und wenigstens eine C₄ Dicarbonsäure (F') zugesetzt.

Die Mengen der Komponenten (C'), (D'), (E') und (F') in Schritt a) werden so gewählt, dass sich die Mengen aller Komponenten (A'), (B'), (C') und (D') bzw. (E') und (F') in der Mischung zu ≤ 100 Gew.-% ergänzen.

In einer bevorzugten Ausführungsform ist das Carbonsäureanhydrid (A') aromatisch.

Vorzugsweise wird das Carbonsäureanhydrid (A') ausgewählt aus der Gruppe bestehend aus Phthalsäureanhydrid, Trimellitsäureanhydrid und Pyromellitsäureanhydrid. Besonders bevorzugt ist das Carbonsäureanhydrid Phthalsäureanhydrid.

Durch den Austausch kleiner Mengen aromatischer Dicarbonsäuren gegen eine äquivalente Menge einer aliphatischen Dicarbonsäure (D' oder F') und den Austausch kleiner Mengen Diethylenglykol gegen äquivalente Mengen der Glykole (C') oder (E'), verringert sich die Menge an Dioxanabfall bei der Herstellung der Polyesterpolyole weit über das durch den Verdünnungseffekt zu erwartendem Maß hinaus. Dabei bleiben die Eigenschaften des hergestellten Polyesterpolyols nahezu gleich, das heißt Polyesterpolyole, die nach dem erfindungsgemäßem Verfahren hergestellt werden, weisen die gleichen Eigenschaften auf wie entsprechende Polyesterpolyole, die ohne Zusatz von aliphatischen Dicarbonsäuren (D' oder F') und ohne Zusatz der Glykole (C') oder (E') hergestellt.

Vorzugsweise wird das C₂-C₄ Glykol (C') ausgewählt aus der Gruppe bestehend aus Ethylenglykol, 1,3-Propandiol, 2-Methyl-1,3-propandiol, 1,2-Propandiol. Besonders bevorzugt ist das C₂-C₄ Glykol (C') Ethylenglykol.

Vorzugsweise wird die aliphatische C₅-C₁₂ Dicarbonsäure (D') ausgewählt aus der Gruppe bestehend aus Glutarsäure, Adipinsäure, Pimelinsäure, Korksäure, Azelainsäure, Sebacinsäure, Undecandisäure und Dodecandisäure. Besonders bevorzugt ist als C₅-C₁₂ Dicarbonsäure (D') Adipinsäure oder Sebacinsäure.

Vorzugsweise wird das C₅-C₁₀ Glykol (E') ausgewählt aus der Gruppe bestehend aus 1,5-Pentandiol, 3-Methyl-1,5-pentandiol, 1,6-Hexandiol und 1,8-Octandiol. Besonders bevorzugt ist das C₅-C₁₀ Glykol (E') 3-Methyl-1,5-pentandiol oder 1,6-Hexandiol.

Vorzugsweise ist die C₄ Dicarbonsäure (F') ausgewählt aus der Gruppe bestehend aus Bernsteinsäure, Fumarsäure und Maleinsäure. Besonders bevorzugt ist die C₄ Dicarbonsäure (F') Bernsteinsäure.

In einer Ausführungsform des erfindungsgemäßen Polyurethan-/Polyisocyanuratpolymers weist das Polyesterpolyol D1 eine durchschnittliche Funktionalität von ≥1,9 bis ≤ 2,1 und eine OH-Zahl von ≥ 220 mg(KOH) / g bis ≤ 270 mg(KOH) / g auf und wird weiterhin aus der Reaktion von Phthalsäure und/oder Phthalsäureanhydrid sowie Adipinsäure, Diethylenglykol und Ethylenglykol erhalten. Die Herstellung kann wie oben beschrieben durchgeführt werden.

In einer Ausführungsform des erfindungsgemäßen Polyurethan-/Polyisocyanuratpolymers ist das Polyetherpolyol D2 ein auf Trimethylolpropan gestartetes Polyoxyethylen- und/oder Polyoxypropylenpolyol mit der OH-Zahl von ≥ 200 mg(KOH) / g bis ≤ 300 mg(KOH) / g. Die OH-Zahl lässt sich nach DIN 53240 bestimmen. Bevorzugt sind OH-Zahlen von ≥ 225 mg(KOH) / g bis ≤ 275 mg(KOH) / g. Die Herstellung kann wie oben beschrieben durchgeführt werden.

Die vorliegende Erfindung betrifft ebenfalls ein Verbundelement, umfassend eine ein erfindungsgemäßes Polyurethan-/Polyisocyanuratpolymer umfassende Schicht und eine Deckschicht. Die Deckschicht wird hierbei zumindest teilweise von der ein erfindungsgemäßes Polyurethan-/Polyisocyanuratpolymer umfassenden Schicht kontaktiert. Vorzugsweise liegt das Polyurethan-/Polyisocyanuratpolymer als Hartschaum vor. Solche Verbundelemente eignen sich beispielsweise für den Industriehallenbau. Hinsichtlich Details zum Präpolymer beziehungsweise zum Polymer wird zur Vermeidung von Wiederholungen vollumfänglich auf die obigen Ausführungen verwiesen.

Vorzugsweise ist das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte. Insbesondere bevorzugt ist es, wenn die Deckschicht Aluminium-Metall oder Stahl ist. Das Aluminium beziehungsweise der Stahl können dabei beschichtet sein. Die erfindungsgemäß eingesetzten modifizierten Isocyanate führen zu einer besonders guten Haftung insbesondere zwischen Polyurethan-/Polyisocyanurat-Schaumstoff und Aluminium-Deckschicht oder Stahl-Deckschicht.

In einem erfindungsgemäßen Schaumstoff-Verbundelement kann die Haftfestigkeit zwischen der ein erfindungsgemäßes Polyurethan-/Polyisocyanuratpolymer umfassenden Schicht und der Deckschicht ≥ 0,20 N/mm² betragen. Vorzugsweise ist diese Haftfestigkeit ≥ 0,20 N/mm² bis ≤ 0,50 N/mm², besonders bevorzugt ≥ 0,22 N/mm² bis ≤ 0,45 N/mm², ganz besonders bevorzugt > 0,25 N/mm² bis ≤ 0,40 N/mm², betragen. Die Haftfestigkeit wird hierbei vorteilhafterweise in Anlehnung an DIN 53292 gemessen, wie weiter unten beschrieben wird.

Ein weiterer Gegenstand der Erfindung ist demzufolge die Verwendung eines erfindungsgemäßen Polyurethan-/Polyisocyanuratpolymers als Isolationsschaum und/oder als Haftvermittler in Verbundelementen, wobei die Verbundelemente eine ein erfindungsgemäßes Polyurethan-/Polyisocyanuratpolymer umfassende Schicht und eine Deckschicht umfassen. Die Deckschicht wird hierbei zumindest teilweise von der ein erfindungsgemäßes Polyurethan-/Polyisocyanuratpolymer umfassenden Schicht kontaktiert.

Die Erfindung wird anhand der nachfolgenden Beispiele weiter erläutert, ohne jedoch darauf begrenzt zu sein.

### Glossar:

- 44V20L:: Desmodur® 44 V 20 L, Gemisch von 4,4'-Diphenylmethandiisocyanat (MDI) und höherfunktionellen Homologen (pMDI) mit einer Viskosität bei 25 °C von ≥ 160 mPas bis ≤ 240 mPas; Bayer MaterialScience AG. Das Produkt enthält ca. 45% 2-Kern MDI.
- 44V70L:: Desmodur® 44 V 70 L, Gemisch von 4,4'-Diphenylmethandiisocyanat (MDI) und höherfunktionellen Homologen (pMDI) mit einer Viskosität bei 25 °C von ≥ 610 mPas bis ≤ 750 mPas; Bayer MaterialScience AG. Das Produkt enthält ca. 34% 2-Kern MDI.
- Polyol 1:: Polyesterpolyol auf der Basis von Adipinsäure, Phthalsäure und Diethylenglykol mit einer OH-Zahl von ca. 210 mg(KOH) / g und einer Viskosität von 10,4 Pa s bei 20 °C; Bayer MaterialScience AG.
- Polyol 2:: bifunktionelles Polyesteretherpolyol, EO-Addukt an eine Mischung aus Phthalsäureanhydrid, Diethylenglycol und Ethylendiamin mit einer OH-Zahl von 275 bis 325 mg(KOH) / g und einer Viskosität von 6,5 +/- 1,3 Pa s bei 25 °C; Bayer MaterialScience AG.
- Polyol 3:: Diethylenglykol, OH-Zahl 1055 mg(KOH) / g, Viskosität 38 mPa s bei 20 °C.

### Beispiel 1: Allgemeine Beschreibung der Herstellung der Präpolymere

19,0 t 44V20L mit 200 mPa s Viskosität bei 25 °C und einem NCO-Gehalt von 31,2% wurden in einen Rührkesselreaktor mit außen liegendem Wärmetauscher und Umpumpkreislauf in 2 h dosiert. Das Isocyanat wurde auf 70 °C aufgeheizt. Anschließend erfolgte die Polyol-Zugabe von 1,0 t über eine Stunde. Die Reaktionstemperatur wurde während der Zugabe konstant auf 70 °C gehalten. Nach einer Nachreaktionszeit von 30 Minuten wurde eine Probe genommen und im Labor überprüft. Der freigegebene Reaktionsansatz wurde abgekühlt und konnte nun in einen Tankwagen gepumpt werden.

### Beispiel 2:

Mit Bezug auf Beispiel 1, der allgemeinen Herstellprozedur, wurden die in der nachfolgenden Tabelle dargestellten Synthesen durchgeführt. In der Terminologie der vorliegenden Erfindung handelt es sich um die Synthesen von Isocyanat-terminierten Präpolymeren C.

Erfindungsgemäße Synthesen sind diejenigen mit Polyol 2 (in der Terminologie der vorliegenden Erfindung Polyesteretherpolyol B), nicht erfindungsgemäß diejenigen mit Polyol 1 und Polyol 3 als Polyolkomponenten. In allen Fällen war die Isocyanatkomponente 44V20L (in der Terminologie der vorliegenden Erfindung Isocyanatkomponente A).

| Beispiel Nummer | 2-1 | 2-2 | 2-3 | 2-4 | 2-5 | 2-6 | 2-7 |
|---|---|---|---|---|---|---|---|
| Polyol | Polyol 1 | Polyol 2 | Polyol 2 | Polyol 2 | Polyol 2 | Polyol 2 | Polyol 3 |
| Gewichts-Anteil Polyol integral | 5,0 | 4,0 | 4,0 | 3,5 | 3,5 | 3,5 | 1,5 |
| Masse Isocyanat [kg] | 427 | 384 | 384 | 386 | 386 | 347 | 394 |
| Masse Polyol [kg] | 23 | 16 | 17,7 | 14,5 | 14,5 | 12,6 | 6 |
| Temperatur Isocyanat [°C] | 70 | 70 | 70 | 70 | 70 | 70 | 70 |
| Temperatur Polyol [°C] | 40 | 40 | 40 | 40 | 40 | 40 | 40 |
| Viskosität [mPas] | 590 | 724 | 729 | 635 | 540 | 550 | 660 |
| NCO-Gehalt [%] | 28,8 | 29,0 | 29,0 | 29,0 | 29,3 | 29,4 | 29,2 |

Die Viskosität wurde gemäß DIN 53019 Teil 1 bei 25 °C und der NCO-Gehalt gemäß ISO 14896 bestimmt.

### Beispiel 3: Herstellung von Metallverbundelementen mit PUR/PIR-Schaum

Ein PUR/PIR-Schaum wurde in üblicher Verfahrensweise auf einem Doppeltransportband unter Verwendung zweier Stahldeckschichten gemäß der nachfolgend aufgeführten Rezeptur erhalten: - 71 Massen-% einer Polyolmischung (in der Terminologie der vorliegenden Erfindung Isocyanat-reaktive Komponente D): aus:
64 Gewichtsteilen eines Polyesterpolyols aus Phthalsäureanhydrid, Adipinsäure, Diethylenglykol und Ethylenglykol mit einer OH-Zahl von 240 mg(KOH) / g (in der Terminologie der vorliegenden Erfindung Polyesterpolyol D1);
5 Gewichtsteilen eines Polyetherpolyols basierend auf TMP (Trimethylolpropan) und Ethylenoxid mit einer Funktionalität von 2 und einer OH-Zahl 240 mg(KOH) / g (in der Terminologie der vorliegenden Erfindung Polyetherpolyol D2); und
2,2 Gewichtsteilen Polyesterpolyol aus Phthalsäureanhydrid und Diethylenglykol, OH-Zahl 795 mg(KOH) / g

### Zusätzliche Komponenten:

- 20 Massen-% Flammschutzmittel TCPP (Tris(chlorpropyl)phosphat)
- 5 Massen-% Flammschutzmittel TEP (Triethylphosphat)
- 4 Massen-% Siliconhaltiger Stabilisator

Dieses wurde mit 5 Gewichtsteilen Carbonsäuresalz (PIR-Katalysator) und 13 Gewichtsteilen Treibmittel n-Pentan (in der Terminologie der vorliegenden Erfindung Komponente E) in der Reaktion zum PUR/PIR-Schaum umgesetzt.

Weiterhin wurde eine Isocyanat-Komponente eingesetzt. Sie im Fall des Vergleichsbeispiels 3-1 das bereits oben erwähnte 44V70L und im erfindungsgemäßen Beispiel 3-2 das Präpolymer aus Beispiel 2-4 (in der Terminologie der vorliegenden Erfindung Präpolymer C).

Die Isocyanat-Komponente und die Isocyanat-reaktive Komponente wurden im Vergleichsbeispiel 3-1 in einem Mischungsverhältnis von 100 Gewichtsteilen der Isocyanat-reaktiven Komponente zu 190 Gewichtsteilen der Isocyanat-Komponente umgesetzt und im erfindungsgemäßen Beispiel 3-2 in einem Mischungsverhältnis von 100 Gewichtsteilen der Isocyanat-reaktiven Komponente zu 220 Gewichtsteilen der Isocyanat-Komponente. Die Versuchsdurchführung erfolgte auf einer kontinuierlich verarbeitenden Anlage zu Herstellung von Metallverbundelementen.

Es wurde die Haftfestigkeit in Anlehnung an die Norm DIN 53292 überprüft. Die Durchführung unterschied sich dabei vom Zugversuch senkrecht zur Deckschicht nach DIN 53292-82 durch die unterschiedliche Probendicke und Anzahl der Deckschichten.

Beim Versuch nach DIN 53292-82 wird die gesamte Dicke der Deckschichten zugrunde gelegt. Dabei bestimmt der schwächste Bereich der Gesamtprobe den Bruchort. Demgegenüber erlaubte der Haftversuch in der hier beschriebenen Abwandlung eine seitenbezogene Beurteilung der Haftung.

Zur Probennahme wurde daher ein Verbundelement senkrecht zu den Deckschichten geschnitten. Bei der Messung wurden quadratische Proben verwendet, deren Seitenlänge 50 mm und deren Probenhöhe 15 mm (einschließlich der Deckschicht) betrug.

Für den Vergleich der Ergebnisse aus Beispiel 3-1 mit Beispiel 3-2 wurden jeweils 3 Vergleichsmessungen durchgeführt. Während für Beispiel 3-1 durchschnittliche Haftfestigkeiten von 0,15 MPa gemessen wurden, lagen diese für Beispiel 3-2 im Bereich von 0,37 MPa. In einer Reproduktion dieses Ergebnisses konnten für Versuch 3-2 sogar noch etwas höhere Haftfestigkeiten von > 0,40 MPa ermittelt werden.

Ebenfalls wurde die Blasenbildung nach Temperung bei 105 °C für 1 h überprüft. Hier zeigte sich für Versuch 3-2 ein störungsfreier Grenzbereich zwischen Schaum und metallischer Deckschicht.

## Patentansprüche

1. Isocyanat-terminiertes Präpolymer C mit einem NCO-Gehalt von ≥ 26,0 Massen-% bis ≤ 31,0 Massen-%, bezogen auf die Masse des Präpolymers C,
erhältlich aus der Reaktion von
(i) einer Isocyanat-Zusammensetzung A mit einer Viskosität (DIN 53019 Teil 1) bei 25 °C von ≥ 60 mPas bis ≤ 800 mPas, umfassend ≥ 25 Massen-% bis ≤ 60 Massen-% monomeres Diphenylmethandiisocyanat A1 und ≥ 40 Massen-% bis ≤ 75 Massen-% polymeres Diphenylmethandiisocyanat A2, wobei die Summe der Anteile der Komponenten A1 und A2 ≤ 100 Massen-% beträgt,
mit
(ii) einem Polyesteretherpolyol B mit einer durchschnittlichen Funktionalität von ≥ 1,9 bis ≤ 2,1 und einer OH-Zahl von ≥ 200 mg(KOH) / g bis ≤ 500 mg(KOH) / g,
erhalten aus der Reaktion von einer Dicarbonsäure und/oder einem Dicarbonsäurederivat B1 mit mindestens einem Polyol B2 sowie mit einem Epoxid B3,
wobei das Polyesteretherpolyol B ausgewählt ist aus der Gruppe von Verbindungen bestehend aus Alkoxylierungsprodukten von Oligo- und Polyestern aus aromatischen und aliphatischen Dicarbonsäuren und Dicarbonsäurederivaten B1 mit gegenüber Isocyanaten reaktiven Endgruppen,
wobei das Polyesteretherpolyol B in Gehalten von ≥ 1,5 Massen-% bis ≤ 6,0 Massen-%, bezogen auf die Summe der Massen von A und B, eingesetzt wird.

2. Präpolymer gemäß Anspruch 1 mit einer Viskosität (DIN 53019 Teil 1) bei 25 °C von ≥ 300 mPas bis ≤ 1600 mPas.

3. Präpolymer gemäß Anspruch 1, wobei die Komponente A eine Viskosität (DIN 53019 Teil 1) bei 25 °C von ≥ 90 mPas bis ≤ 300 mPas und einen NCO-Gehalt von ≥ 30 Massen- % bis ≤ 33 Massen-% aufweist.

4. Präpolymer gemäß Anspruch 1, wobei das Polyesteretherpolyol B erhalten wird aus der Reaktion von Phthalsäureanhydrid als Komponente B1, Diethylenglykol als Komponente B2 und Ethylenoxid als Komponente B3.

5. Präpolymer gemäß Anspruch 4, wobei die Reaktion in Anwesenheit von ethoxyliertem Amin als Katalysator stattfindet.

6. Polyurethan-/Polyisocyanuratpolymer, erhältlich aus der Reaktion eines Präpolymers C gemäß einem der Ansprüche 1 bis 5 mit einer Isocyanat-reaktiven Komponente D.

7. Polyurethan-/Polyisocyanuratpolymer gemäß Anspruch 6, wobei im Reaktionsgemisch der Komponenten C und D das molare Verhältnis von Isocyanat-Gruppen zu Hydroxyl-Gruppen ≥ 1:1 bis ≤ 5:1 beträgt.

8. Polyurethan-/Polyisocyanuratpolymer gemäß Anspruch 6, wobei die Reaktion des Präpolymers C mit der Isocyanat-reaktiven Komponente D in Gegenwart eines Treibmittels E stattfindet.

9. Polyurethan-/Polyisocyanuratpolymer gemäß Anspruch 6, wobei die Isocyanat-reaktive Komponente D ≥ 50 Massen-% bis ≤ 95 Massen-% eines Polyesterpolyols D1 und > 5 Massen-% bis ≤ 50 Massen-% eines Polyetherpolyols D2, jeweils bezogen auf die Gesamtmasse der Komponente D, umfasst und wobei weiterhin die Summe der Anteile der Komponenten D1 und D2 ≤ 100 Massen-% beträgt.

10. Polyurethan-/Polyisocyanuratpolymer gemäß Anspruch 9, wobei das Polyesterpolyol D1 eine durchschnittliche Funktionalität von ≥1,9 bis ≤2,1 und eine OH-Zahl von ≥ 220 mg(KOH) / g bis ≤ 270 mg(KOH) / g aufweist und weiterhin aus der Reaktion von Phthalsäure und/oder Phthalsäureanhydrid sowie Adipinsäure, Diethylenglykol und Ethylenglykol erhalten wird.

11. Polyurethan-/Polyisocyanuratpolymer gemäß Anspruch 9, wobei das Polyetherpolyol D2 ein auf Trimethylolpropan gestartetes Polyoxyethylen- und/oder Polyoxypropylenpolyol mit einer OH-Zahl von ≥ 200 mg(KOH) / g bis ≤ 300 mg(KOH) / g ist.

12. Verbundelement, umfassend eine ein Polyurethan-/Polyisocyanuratpolymer gemäß einem oder mehreren der Ansprüche 6 bis 11 umfassende Schicht und eine Deckschicht.

13. Verbundelement gemäß Anspruch 12, wobei das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte ist.

14. Verbundelement gemäß Anspruch 12, wobei die Haftfestigkeit zwischen der ein Polyurethan-/Polyisocyanuratpolymer gemäß einem oder mehreren der Ansprüche 5 bis 10 umfassenden Schicht und der Deckschicht > 0,20 N/mm² beträgt.

15. Verwendung eines Polyurethan-/Polyisocyanuratpolymers gemäß einem oder mehreren der Ansprüche 6 bis 11 als Isolationsschaum und/oder als Haftvermittler in Verbundelementen, wobei die Verbundelemente eine ein Polyurethan-/Polyisocyanuratpolymer gemäß einem oder mehreren der Ansprüche 6 bis 11 umfassende Schicht und eine Deckschicht umfassen.

## Claims

1. Isocyanate-terminated prepolymer C with from ≥ 26.0% by mass to ≤ 31.0% by mass NCO content, based on the mass of the prepolymer C,
obtainable from the reaction of
(i) an isocyanate composition A with viscosity of from ≥ 60 mPas to ≤ 800 mPas at 25°C (DIN 53019 Part 1), comprising
from ≥ 25% by mass to ≤ 60% by mass of monomeric diphenylmethane diisocyanate A1 and
from ≥ 40% by mass to ≤ 75% by mass of polymeric diphenylmethane diisocyanate A2,
where the sum of the proportions of components A1 and A2 is ≤ 100% by mass,
with
(ii) a polyesterether polyol B with average functionality of from ≥ 1.9 to ≤ 2.1 and with OH number of from ≥ 200 mg(KOH)/g to ≤ 500 mg(KOH)/g,
obtainable from the reaction of a dicarboxylic acid and/or dicarboxylic acid derivative B1 with at least one polyol B2, and also with an epoxide B3,
where the polyesterether polyol B is selected from the group of compounds composed of alkoxylation products of oligo- and polyesters made of aromatic and aliphatic dicarboxylic acids and of dicarboxylic acid derivatives B1 having terminal groups reactive toward isocyanates,
where content of the polyesterether polyol B used is from ≥ 1.5% by mass to ≤ 6.0% by mass, based on the sum of the masses of A and B.

2. Prepolymer according to Claim 1 with viscosity of from ≥ 300 mPas to ≤ 1600 mPas at 25°C (DIN 53019 Part 1).

3. Prepolymer according to Claim 1, where the viscosity of component A is from ≥ 90 mPas to ≤ 300 mPas at 25°C (DIN 53019 Part 1) and the NCO content thereof is from ≥ 30% by mass to ≤ 33% by mass.

4. Prepolymer according to Claim 1, where the polyesterether polyol B is obtained from the reaction of phthalic anhydride and component B1, diethylene glycol as component B2 and ethylene oxide as component B3.

5. Prepolymer according to Claim 4, where the reaction takes place in the presence of ethoxylated amine as catalyst.

6. Polyurethane/polyisocyanurate polymer obtainable from the reaction of a prepolymer C according to any of Claims 1 to 5 with an isocyanate-reactive component D.

7. Polyurethane/polyisocyanurate polymer according to Claim 6, where the molar ratio of isocyanate groups in the reaction mixture of components C and D to hydroxy groups is from ≥ 1:1 to ≤ 5:1.

8. Polyurethane/polyisocyanurate polymer according to Claim 6, where the reaction of the prepolymer C with the isocyanate-reactive component D takes place in the presence of a blowing agent E.

9. Polyurethane/polyisocyanurate polymer according to Claim 6, where the isocyanate-reactive component D comprises from ≥ 50% by mass to ≤ 95% by mass of a polyester polyol D1 and from ≥ 5% by mass to ≤ 50% by mass of a polyether polyol D2, based in each case on the total mass of component D, and where moreover the sum of the proportions of components D1 and D2 is ≤ 100% by mass.

10. Polyurethane/polyisocyanurate polymer according to Claim 9, where the average functionality of the polyester polyol D1 is from ≥ 1.9 to ≤ 2.1 and the OH number thereof is from ≥ 220 mg(KOH)/g to ≤ 270 mg(KOH)/g and it is moreover obtained from the reaction of phthalic acid and/or phthalic anhydride, adipic acid, diethylene glycol and ethylene glycol.

11. Polyurethane/polyisocyanurate polymer according to Claim 9, where the polyether polyol D2 is a trimethylolpropane-started polyoxyethylene polyol and/or trimethylol-propane-started polyoxypropylene polyol with, in both cases, an OH number of from ≥ 200 mg(KOH)/g to ≤ 300 mg (KOH)/g.

12. Composite element comprising a layer comprising a polyurethane/polyisocyanurate polymer according to one or more of Claims 6 to 11, and an outer layer.

13. Composite element according to Claim 12, where the material of the outer layer is aluminium, steel, bitumen, paper, a non-woven mineral material, a non-woven material comprising organic fibres, a plastics sheet, a plastics film and/or a sheet of wood.

14. Composite element according to Claim 12, where the adhesion between the layer comprising a polyurethane/polyisocyanurate polymer according to one or more of Claims 5 to 10 and the outer layer is ≥ 0.20 N/mm².

15. Use of a polyurethane/polyisocyanurate polymer according to one or more of Claims 6 to 11 as insulation foam and/or as adhesion promoter in composite elements, where the composite elements comprise a layer comprising a polyurethane/polyisocyanurate polymer according to one or more of Claims 6 to 11, and an outer layer.

## Revendications

1. Prépolymère C à terminaison isocyanate, ayant une teneur en NCO de ≥ 26,0 % en masse à ≤ 31,0 % en masse, par rapport à la masse du prépolymère C,
pouvant être obtenu par la réaction de
(i) une composition d'isocyanate A ayant une viscosité (DIN 53019 section 1) à 25 °C de ≥ 60 mPa.s à ≤ 800 mPa.s, comprenant
≥ 25 % en masse à ≤ 60 % en masse de diphényl-méthanediisocyanate monomère A1 et
≥ 40 % en masse à ≤ 75 % en masse de diphényl-méthanediisocyanate polymère A2,
la somme des proportions des composants A1 et A2 valant ≤ 100 % en masse,
avec
(ii) un polyesterétherpolyol B ayant une fonctionnalité moyenne de ≥ 1,9 à ≤ 2,1 et un indice de groupes OH de ≥ 200 mg (de KOH) / g à 500 mg (de KOH) / g.
obtenu par la réaction d'un acide dicarboxylique et/ou d'un dérivé d'acide dicarboxylique B1) avec au moins un polyol B2 ainsi qu'avec un époxyde B3, le polyesterétherpolyol B étant choisi dans le groupe de composés constitué par des produits d'alcoxylation d'oligoesters et de polyesters à base d'acides dicarboxyliques et de dérivés d'acides dicarboxyliques aromatiques ou aliphatiques B1 comportant des groupes terminaux réactifs vis-à-vis d'isocyanates,
le polyesterétherpolyol B étant utilisé en des proportions de ≥ 1,5 % en masse à ≤ 60 % en masse, par rapport à la somme des masses de A et B.

2. Prépolymère selon la revendication 1, ayant une viscosité (DIN 53019 section 1) à 25 °C de ≥ 300 mPa.s à ≤ 1 600 mPa.s.

3. Prépolymère selon la revendication 1, dans lequel le composant A présente une viscosité (DIN 53019 section 1) à 25 °C de ≥ 90 mPa.s à ≤ 300 mPa.s et une teneur en NCO de ≥ 30 % en masse à ≤ 33 % en masse.

4. Prépolymère selon la revendication 1, dans lequel le polyesterétherpolyol B est obtenu par la réaction d'anhydride phtalique en tant que composant B1, diéthylèneglycol en tant que composant B2 et oxyde d'éthylène en tant que composant B3.

5. Prépolymère selon la revendication 4, pour lequel la réaction a lieu en présence d'amine éthoxylée en tant que catalyseur.

6. Polymère polyuréthane/polyisocyanurate, pouvant être obtenu par la réaction d'un prépolymère C selon l'une quelconque des revendications 1 à 5 avec un composant D réactif avec un isocyanate.

7. Polymère polyuréthane/polyisocyanurate selon la revendication 6, pour lequel dans le mélange réactionnel des composants C et D le rapport molaire des groupes isocyanate aux groupes hydroxy vaut de ≥ 1:1 à ≤ 5:1.

8. Polymère polyuréthane/polyisocyanurate selon la revendication 6, pour lequel la réaction du prépolymère C avec le composant D réactif avec un isocyanate a lieu en présence d'un agent porogène.

9. Polymère polyuréthane/polyisocyanurate selon la revendication 6, dans lequel le composant D réactif avec un isocyanate comprend ≥ 50 % en masse à ≤ 95 % en masse d'un polyesterpolyol D1 et ≥ 5 % en masse à ≤ 50 % en masse d'un polyétherpolyol D2, chaque fois par rapport à la masse totale du composant D, et dans lequel en outre la somme des proportions des composants D1 et D2 vaut ≤ 100 % en masse.

10. Polymère polyuréthane/polyisocyanurate selon la revendication 9, dans lequel le polyesterpolyol D1 présente une fonctionnalité moyenne de ≥ 1,9 à ≤ 2,1 et un indice de groupes OH de ≥ 220 mg (de KOH / g à ≤ 270 mg (de KOH) / g et en outre est obtenu par la réaction d'acide phtalique et/ou d'anhydride phtalique ainsi que d'acide adipique, de diéthylèneglycol et d'éthylèneglycol.

11. Polymère polyuréthane/polyisocyanurate selon la revendication 9, dans lequel le polyétherpolyol D2 est un polyoxyéthylèneglycol et/ou polyoxypropylèneglycol amorcé sur triméthylopropane, ayant un indice de groupes OH de ≥ 200 mg (de KOH / g à ≤ 300 mg (de KOH) / g.

12. Élément composite, comprenant une couche comprenant un polymère polyuréthane/polyisocyanurate selon une ou plusieurs des revendications 6 à 11 et une couche de recouvrement.

13. Élément composite selon la revendication 12, dans lequel le matériau de la couche de recouvrement est l'aluminium, l'acier, le bitume, du papier, un non-tissé minéral, un non-tissé comprenant des fibres organiques, une plaque de matière plastique, un film de matière plastique et/ou un panneau de bois.

14. Élément composite selon la revendication 12, dans lequel l'adhésivité entre la couche comprenant un polymère polyuréthane/polyisocyanurate selon une ou plusieurs des revendications 5 à 10 et la couche de recouvrement est ≥ 0,20 N/mm².

15. Utilisation d'un Polymère polyuréthane/ polyisocyanurate selon une ou plusieurs des revendications 6 à 11 en tant que mousse isolante et/ou en tant qu'agent d'adhérence dans des éléments composites, les éléments composites comprenant une couche comprenant un polymère polyuréthane/ polyisocyanurate selon une ou plusieurs des revendications 6 à 11 et une couche de recouvrement.
